# EUROPÄISCHE PATENTSCHRIFT

(11) **EP 0 820 804 B1**
(45) Veröffentlichungstag und Bekanntmachung des Hinweises auf die Patenterteilung: **14.12.2005**
(21) Anmeldenummer: 97810499.0
(22) Anmeldetag: 17.07.1997
(51) Int. Cl.: B01D 61/24, G01N 35/08

(54) **Verfahren und Vorrichtung zur Probenvorbereitung**
Method and apparatus for preparing samples
Procédé et appareil pour la préparation d'échantillons

(30) Priorität: 26.07.1996 CH 186996
(43) Veröffentlichungstag der Anmeldung: 28.01.1998
(73) Patentinhaber: METROHM AG, 9100 Herisau (CH)
(72) Erfinder: Schäfer, Helwig, 9100 Herisau (CH); Frenzel, Wolfgang, 10823 Berlin (DE)
(74) Vertreter: Hepp, Dieter

(56) Entgegenhaltungen:
- FR-A- 1 528 430
- FR-A- 1 573 147
- US-A- 4 491 011
- US-A- 4 529 521

## Beschreibung

Die Erfindung betrifft ein Verfahren und eine Vorrichtung zur Probenvorbereitung für ein chemisches Analyseverfahren, insbesondere für die Chromatographie, gemäss dem Oberbegriff der unabhängigen Patentansprüche.

Als Vorbereitung zur Durchführung chemischer Analyseverfahren wie beispielsweise Chromatographie oder Flowtechniken muss die zu analysierende Probe vorbereitet werden. Analyseproben enthalten neben den zu bestimmenden Ionen oder Molekülen (Analyten) Verunreinigungen, insbesondere grössere Moleküle oder feste Bestandteile, die zu verfälschten Analyseresultaten führen können. Diese Verunreinigungen müssen vor dem Analyseverfahren aus der Analyseprobe entfernt werden. Häufig vorkommende Verunreinigungen sind beispielsweise Eiweisse bei der Analyse von Lebensmitteln oder Filterfasern, Staubpartikel oder ähnliches bei Analysen im Umweltbereich.

Zum Entfernen dieser Moleküle oder Feststoffe aus der Analyseprobe sind verschiedene Verfahren bekannt. So können die Analyseproben durch Zugabe von beispielsweise Säure und durch Zentrifugation oder Filtration vorbereitet werden. Aus der US 5,279,972 und der US 4,837,157 sind Trennverfahren mittels Dialyse bekannt. Gemäss dem Verfahren der US 4,837,157 werden die Analyselösung und eine Akzeptorlösung auf beiden Seiten einer permeablen Membran bewegt. Die permeable Membran ist derart ausgewählt, dass die zu bestimmenden Analyten durch die Membran migrieren können und dass die von der Analyse auszuschliessenden Verunreinigungen durch die Membran zurückgehalten werden. Ein Problem bei diesem bekannten Verfahren besteht darin, dass in der die Analyten erhaltenden Akzeptorlösung nie eine gleich hohe Konzentration der Analyten wie in der ursprünglichen Analyselösung erreicht werden kann. Die Analyten migrieren maximal so lange durch die Membran in die Akzeptorlösung, bis auf beiden Seiten der Membran eine gleiche Konzentration festzustellen ist. Die Konzentration der Analyten in der Akzeptorlösung weist also maximal einen Wert von 50% auf. Dies ist vor allem dann nachteilig, wenn verschiedene Analyten in der Analyselösung vorhanden sind. Ionen unterschiedlicher Grösse migrieren nicht mit gleicher Geschwindigkeit durch die Membran. Diese theoretischen Konzentrationswerte von 50 % werden auch nur bei sehr langen Dialysezeiten von bis zu einigen Stunden erreicht. Im Normalfall wird beispielsweise Chlorid nur zu 10% bis 30% und Sulfat nur zu 5% bis 10% in der Akzeptorlösung angereichert. Beim Auftreten von verschiedenen Analyten ergeben sich dadurch Ungenauigkeiten in Bezug auf das Verhältnis der Konzentrationen der einzelnen Analyten. Schwer oder nur ungenau reproduzierbare Analysen sind die Folge davon.

Aus Martinez et al. (membrane extraction - preconcentration cell coupled on-line to flow injection and liquid chromatographic systems. Determination of triazines in oil, Analytica Chimica Acta 304 (1995) 323 - 332) ist eine Membran-Extraktion bekannt, bei welcher die Akzeptorlösung in der Akzeptorzelle für eine bestimmte Zeitspanne stillgehalten wird. Durch gezielte Wahl der Akzeptorlösung werden die in die Akzeptorlösung migrierten Analyten umgewandelt (protoniert), so dass die Konzentration der unveränderten Analyten in der Akzeptorlösung ständig auf einem tiefen Wert bleibt. Auf diese Weise wird ein Gradient erzeugt, der die fortlaufende Diffusion von Analyten in die Akzeptorlösung erlaubt. Der Nachteil bei diesem Verfahren besteht darin, dass zum Ausführen der eigentlichen Analyse die umgewandelten Analyten wieder in die ursprüngliche Form gebracht werden müssen. Dies bedingt einen zusätzlichen Verfahrensschritt und erhöht die Gefahr von Verlusten bzw. Messfehlern. Ausserdem lässt sich das von Martinez et al. bekannte Verfahren schwer auf die Ionenanalyse übertragen. Während Martinez et al. von basischen, organischen Molekülen ausgehen, welche in einer Säule durch Protonierung einfach dem Gleichgewicht entzogen werden können, sind für Ionen keine solch einfachen Reaktionen möglich.

Aus dem Dokument US -A- 4,529,521 sind eine Methode und eine Vorrichtung bekannt, welche zur vorbereitenden Behandlung von Latexlösungen für die Flüssigkeitschromatographie eingesetzt werden. Hierbei wird die Analyselösung mit der in Dialysschläuchen befindlichen Akzeptorlösung in Kontakt gebracht, welche anschliessend einer Chromatographie-Anlage zugeführt wird. Das Verfahren zielt in erster Linie auf eine Verkürzung der Probenvorbereitungszeit. Nachteilig ist hingegen auch bei diesem Verfahren, dass kein quantitatives Abbild der Konzentrationen der Analyten in der Analyselösung erhalten wird.

Die Aufgabe der vorliegenden Erfindung besteht darin, die Nachteile des Bekannten zu vermeiden, insbesondere ein Verfahren und eine Vorrichtung zur Probenvorbereitung für ein Analyseverfahren zu schaffen, welche eine hohe Dialyserate erlauben, und damit auf einfache Weise ein wirtschaftliches und rasches Vorbereiten von Proben für Analyseverfahren erlauben. Erfindungsgemäss wird diese Aufgabe mit einem Verfahren und einer Vorrichtung mit den Merkmalen des kennzeichnenden Teils der unabhängigen Patentansprüche gelöst.

Bei einem Verfahren zur Probenvorbereitung für ein chemisches Analyseverfahren, insbesondere für die Chromatographie oder für Flowtechniken werden die Analyten einer Analyselösung von den in der Analyselösung enthaltenden Verunreinigungen (beispielsweise Eiweisse oder Kohlefaserpartikel) mittels Dialyse getrennt. Dazu wird die Analyselösung in eine Probekammer und eine bestimmbare Menge der Akzeptorlösung in einen Akzeptorkreis einer Dialysezelle gegeben. Der Akzeptorkreis und die Probekammer sind voneinander durch eine permeable Membran getrennt, die so gewählt ist, dass die Analyten durch die Membran von der Probekammer in den Akzeptorkreis migrieren können. Diese gegen die Akzeptorkammer gerichtete Migration findet statt, so lange die Konzentration der Analyten in der Probenkammer grösser ist als in dem Akzeptorkreis. Erfindungswesentlich ist, dass kontinuierlich frische Analyselösung in die Probekammer gefördert wird, so dass die Konzentration der Analyten in der Probekammer ständig einen Wert von nahezu 100% aufweist. Die Akzeptorlösung wird in den Akzeptorkreis gegeben und in diesem gehalten, so dass keine Erneuerung der Akzeptorlösung stattfindet. Da die Konzentration der Analyten in der Probekammer andauernd einen Wert von nahezu 100% aufweist, stellt sich erst ein Gleichgewicht ein, wenn auch die Konzentration in der Akzeptorkammer einen Wert von nahezu 100% erreicht. Bei Erreichen dieses Wertes kann die Akzeptorlösung aus dem Akzeptorkreis entfernt werden und einem Analysegerät zugeführt werden. Unter Akzeptorkreis wird eine Akzeptorkammer einer Dialysezelle verstanden, die gegen die Zufuhr neuer Akzeptorlösung abschliessbar ist. Denkbar ist eine Vorrichtung, die die Akzeptorkammer mit ihren beiden Enden zu einem Akzeptorkreis kurzschliesst. Es ist aber auch möglich, die Akzeptorkammer an ihren beiden Enden abschliessbar auszubilden. Im folgenden werden unter dem Oberbegriff Akzeptorkreis die beiden Möglichkeiten zusammengefasst.

Unter frischer Analyselösung wird eine Lösung verstanden, die die gleiche Konzentration von Analyten aufweist wie die unvorbereitete Analyse- oder Probelösung.

In Prozenten angegebene Konzentrationen beziehen sich auf die Konzentration der Analyten in der ursprünglichen Analyselösung. Je länger die Akzeptorlösung in der Akzeptorkammer belassen wird, um so höhere Konzentrationswerte können erreicht werden. In einem besonders vorteilhaften Verfahren wird die Analyselösung so lang durch die Probekammer gepumpt, bis die Konzentration der Akzeptorlösung einen Wert von nahezu 100 % (mindestens 95 %) aufweist. Typischerweise werden Analysezeiten von 4 bis 12 min als ausreichend zum Erreichen einer für das anschliessende Analyseverfahren zufriedenstellende Konzentration betrachtet.

Besonders günstig ist dieses Vorbereitungsverfahren als Vorbereitung für eine anschliessende Chromatographie. Es kann aber auch für andere analytische Verfahren verwendet werden, bei welchen eine Trennung von in einer Lösung enthaltenen Stoffen erreicht werden muss.

Zum Erreichen der vorangehend erwähnten Analysezeiten und Konzentrationswerte beträgt der Fluss der Analyselösung in einem besonders günstigen Ausführungsbeispiel zwischen 0,01 und 10 Milliliter pro Minute, vorzugsweise 0,8 Milliliter pro Minute.

Unter Probekammer wird ganz allgemein ein zur Aufnahme der Analyselösung geeignetes Behältnis oder ein von Probelösung durchflossener Bereich verstanden. Es ist denkbar, das erfindungsgemässe Verfahren mit Probekammern und Akzeptorkammern unterschiedlicher Form und Dimension durchzuführen. So kann zum Beispiel eine durch eine Dialysemembran nach aussen begrenzte Akzeptorkammer als Sonde verwendet werden. Diese kann in eine Analyseprobe getaucht werden. Die Probekammer kann in diesem Fall z.B. durch einen Flüssigkeitsstrom (wie etwa einem Wasserlauf) gebildet werden. Durch Eintauchen einer solchen Sonde in ein strömendes Medium wird automatisch gewährleistet, dass die Dialysemembran auf einer Seite in ständigem Kontakt mit frischer Analyselösung steht. Solche Sonden können nach der erfolgten Dialyse aus der Probekammer, beispielsweise aus dem strömenden Medium herausgenommen werden. Die Akzeptorlösung wird der Sonde entnommen und einem Analysegerät zugeführt. Die Sonde kann natürlich auch als getrenntes Probenahmegerät eingesetzt werden. Bei der Verwendung der Akzeptorkammer als Sonde sind Akzeptorkammer und Probekammer physisch voneinander getrennt. Die Messvorrichtung besteht dabei im wesentlichen aus dem mit der Membran abgeschlossenen Akzeptorkreis. Dabei kann ein schlauch- oder kugelförmiger Akzeptorkreis verwendet werden. Der Akzeptorkreis kann verschliessbar ausgebildet oder direkt über eine Ventilanordnung mit einem Analysegerät verbindbar sein. Anstatt die Probelösung durch Zuführen neuer Probelösung in ständiger Bewegung zu halten ist es auch denkbar, die Akzeptorkammer durch eine statische Probelösung zu bewegen.

Erfindungswesentlich ist, dass die eine Seite der Dialysemembran in ständigem Kontakt mit Analyselösung mit annähernd hunderprozentiger Konzentration steht, während die andere Seite der Membran in Kontakt mit der ursprünglich eingegebenen unveränderten Akzeptorlösung ist und bleibt, bis ein vorgegebener Wert der Konzentration der Analyten in der Akzeptorlösung erreicht ist. Unverändert heisst in diesem Zusammenhang, dass die Akzeptorlösung weder ersetzt wird noch durch eine chemische Reaktion verändert wird.

Die erfindungsgemässe Vorrichtung zur Probenvorbereitung für ein chemisches Analyseverfahren, insbesondere für die Chromatographie, weist im wesentlichen eine Dialysezelle mit einer Probekammer zur Aufnahme einer Analyselösung und einem Akzeptorkreis zur Aufnahme einer bestimmbaren Menge einer Akzeptorlösung auf.

Die Probekammer ist für eine kontinuierliche Zufuhr von frischer Probelösung ausgelegt und der Akzeptorkreis ist zur Konstanthaltung der eingegebenen Menge von Akzeptorlösung ausgelegt.

In einer besonders vorteilhaften Ausführungsform der Erfindung ist ein Mehrwegventil zur Steuerung des Probevorbereitungsprozesses vorgesehen. Die Akzeptorkammer einer Dialysezelle ist dabei durch das Mehrwegventil zu einem Akzeptorkreis kurzschliessbar.

Die Akzeptorkammer der Dialysezelle ist beidseitig direkt jeweils mit einem Anschluss des Ventils verbunden. Diese beiden Anschlüsse sind während der Dialyse in einer Dialysestellung miteinander verbindbar. In der Dialysestellung ist die Akzeptorkammer in sich geschlossen, und es findet keine Erneuerung der Akzeptorlösung statt.

Ein besonders einfaches Ausführungsbeispiel ergibt sich, wenn jeweils zwei der übrigen Anschlüsse des Mehrwegventils einerseits mit der Speisung der Akzeptorlösung und andererseits mit einem Analysesystem verbunden sind. In der einen Analysestellung des Ventils sind die mit der Akzeptorkammer verbundenen Anschlüsse mit den mit der Speisung der Akzeptorlösung und mit dem Analysesystem verbundenen Anschlüssen verbindbar. Die Analysestellung des Ventils entspricht im wesentlichen einer Spülstellung, welche ein Durchspülen und Reinigen der Dialysezelle erlaubt. In dieser Stellung kann die Akzeptorzelle mit Akzeptorlösung durchspült werden.

Zum Fördern der Analyselösung und auch zum Beigeben der Akzeptorlösung in den Akzeptorkreis respektive zum Reinigen kann eine Pumpe verwendet werden, vorzugsweise ist die Pumpe eine Zweikanalschlauchpumpe. Auf diese Weise kann je nach Bedarf nur die Analyselösung oder die Analyselösung und die Akzeptorlösung gepumpt werden.

Es ist aber auch denkbar, zum Fördern der Analyselösung und/oder der Akzeptorlösung ein Spritzen- oder Dosiersystem zu verwenden, oder mittels Überdruck einen Gasdruck (Inertgas oder auch Luft) auf ein die Analyselösung oder die Akzeptorlösung enthaltendes Behältnis auszuüben.

Es hat sich gezeigt, dass mit der Wahl einer besonderen Form der Akzeptorkammer und der Probekammer besonders günstige Dialyseresultate erreicht werden können. Mäanderförmig, schnecken- oder spiralförmig angeordnete Kammern haben sich als besonders vorteilhaft erwiesen.

Die Erfindung wird im nachfolgenden in einem Ausführungsbeispiel und anhand der Zeichnungen näher erläutert. Es zeigen:
- Figur 1 :: eine schematische Darstellung einer erfindungsgemässen Vorrichtung in einer Spül- resp. Analysestellung,
- Figur 2:: die Vorrichtung von Figur 1 in einer Dialysestellung,
- Figur 3:: eine schematische Darstellung der Dialysezelle der Vorrichtung von Figur 1,
- Figur 4 :: eine schematische Darstellung des mäanderförmigen Verlaufs der Dialysekanäle als Ausführungsbeispiel einer Dialysezelle, und
- Figur 5: eine schematische Darstellung eines weiteren Ausführungsbeispiels der erfindungsgemässen Vorrichtung.

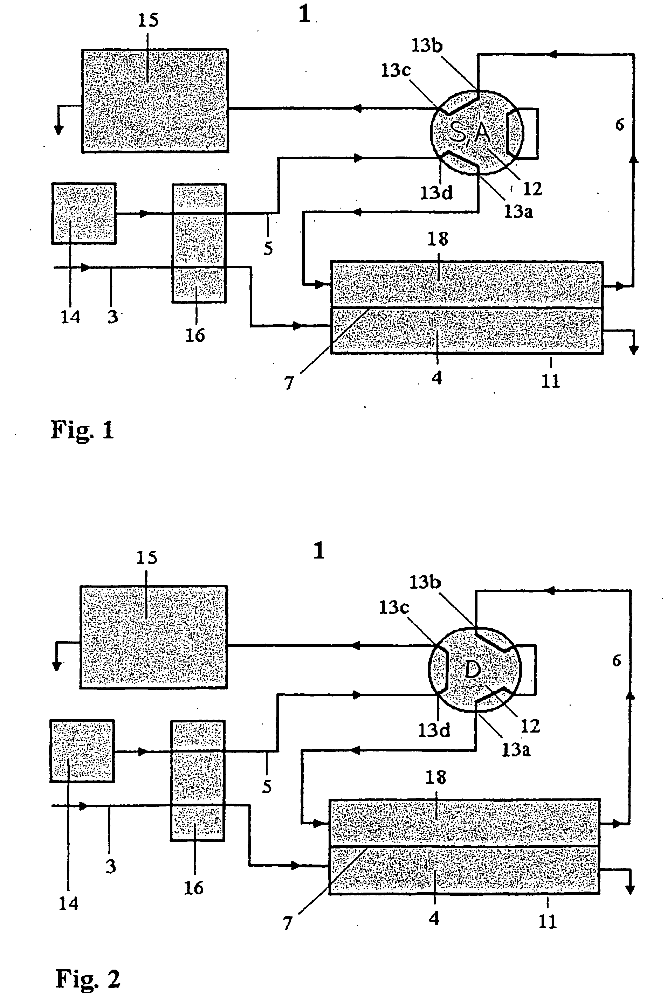

Figur 1 zeigt eine erfindungsgemässe Vorrichtung 1 mit einem Mehrwegventil 12 in Spülstellung S oder Analysestellung A. Die Vorrichtung 1 besteht im wesentlichen aus einer Dialysezelle 11 und dem Ventil 12. Die Dialysezelle 11 weist einen Akzeptorkreis 6 mit einer Akzeptorkammer 18 und eine Probenkammer 4 auf, welche mit einer permeablen Membran 7 voneinander getrennt sind.

Eine Analyten 1 einer Analyseprobe 2 enthaltende Analyselösung 3 wird mittels einer Pumpe 16 durch die Probekammer 4 der Dialysezelle 11 gefördert. Gleichzeitig wird die Akzeptorkammer 18 der Dialysezelle 11 mit einer Akzeptorlösung 5 gefüllt. Die Pumpe 16 ist eine Zweikanalschlauchpumpe und kann auch für das Eingeben der Akzeptorlösung 5 in die Akzeptorkammer 18 benutzt werden. Die Akzeptorkammer 18 ist mit zwei Anschlüssen 13a, 13b des Ventils 12 verbunden. Zwei weitere Anschlüsse 13c, 13d des Ventils 12 sind einerseits mit einer Analysevorrichtung 15 und andererseits mit einer Speisung 14 der Akzeptorlösung verbunden. In der Spülstellung S oder der Analysestellung A sind die Anschlüsse 13a, 13b je mit einem der Anschlüssen 13d, 13c verbunden.

Sobald die Akzeptorkammer 18 mit frischer Akzeptorlösung gefüllt ist, kann das Ventil 12 von der Spülstellung S in eine Dialysestellung D gestellt werden.

Figur 2 zeigt die erfindungsgemässe Vorrichtung in der Dialysestellung D. Die beiden Ausgänge der Akzeptorkammer 18 sind mit den Anschlüssen 13a, 13b des Ventils 12 verbunden, welche ihrerseits untereinander verbunden sind. Die Akzeptorkammer 18 ist dadurch Teil eines in sich geschlossenen Akzeptor-Kreises 6, die Akzeptorlösung 5 wird nicht erneuert und bleibt stehend im Akzeptorkreis 6. Gleichzeitig wird mit der Pumpe 16 die Analyselösung 3 durch die Probenkammer 4 gefördert. Die aus der Probekammer 4 austretende Lösung enthält eine geringere Konzentration an Analyten 1 und wird nicht weiter verwertet. Die Konzentration der Analyten 1 in der Probekammer 4 beträgt 100%, auch wenn die Analyten 1 dauernd durch die Membran 7 in die Akzeptorkammer 18 migrieren. Die Abnahme der Konzentration der Analyten 1 in der Probekammer 4 wird durch die nachgeführte 100%ige Analyselösung 3 kompensiert. Solange die Konzentration der Analyten 1 in der Probekammer 4 grösser ist als in der Akzeptorkammer 18 ist die Migration der Analyten von der Probekammer 4 nach der Akzeptorkammer 18 grösser als in umgekehrter Richtung. Die Konzentration der Analyten 1 steigt so lange an, wie 100%ige Analyselösung 3 durch die Probekammer 4 gefördert wird. Auf diese Weise kann auch in der Akzeptorkammer 18 eine Konzentration der Analyten 1 von annähernd 100% erreicht werden.

Nach Erreichen der gewünschten Analytenkonzentration im Akzeptorkreis 6 wird die Akzeptorlösung 5 zu einer Analysevorrichtung 15 gegeben. Dazu wird das Ventil 12 in eine Analysestellung A geschaltet. Die Analysestellung A entspricht im wesentlichen der in Figur 1 gezeigten Spülstellung S. Die Analyten 1 enthaltende Akzeptorlösung 5 im Akzeptorkreis 6 wird mittels der Pumpe 16 zu der Analysevorrichtung 15 gepumpt.

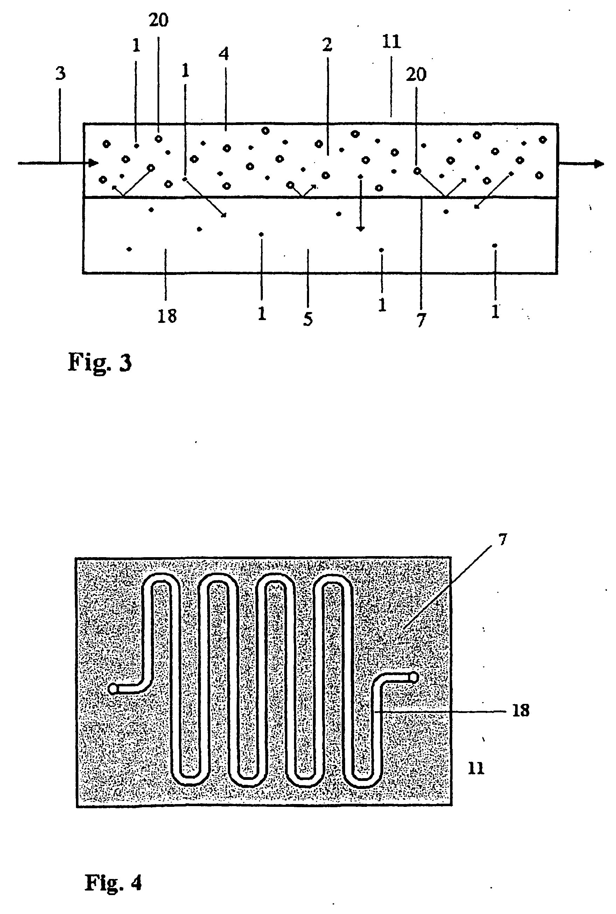

Figur 3 zeigt eine schematische Darstellung der Dialysezelle 11. In der oberen Bildhälfte ist eine Probekammer 4 gezeigt, welche kontinuierlich mit einer Analyselösung 3 durchspült wird. Die Analyselösung 3 enthält eine Analyseprobe 2 mit Analyten 1 und mit Verunreinigungen 20. Die permeable Membran 7 ist derart ausgewählt, dass die Analyten 1 in die eine Akzeptorlösung 5 enthaltende Akzeptorkammer 18 migrieren können. Die Verunreinigungen 20 werden aber durch die Membran 7 zurückgehalten.

Als Membran 7 wird vorzugsweise eine handelsübliche Dialysemembran mit einem MWCO von 1000 (MWCO = Molecular Weight Cut Off) verwendet, z.B. Spectraltor® CEA Membrane, MWCO 1000. Die Dimensionen der Dialysezelle 11 betragen z.B. 7 x 3 cm. Der Fluss der Analyselösung 3 wird vorzugsweise in einem Bereich von 0,01 bis 10 Milliliter pro Minute gewählt. Dadurch wird erreicht, dass nach einer Dialysezeit von 12 Minuten im Akzeptorkreis 6 eine Analytenkonzentration von 98% bis 100% erreicht wird.

Die Steuerung der Pumpe 16 und des Ventils 2 kann vorzugsweise mit der Steuerung eines Chromatographen, insbesondere eines Ionenchromatographen kombiniert werden. Auf diese Weise ergibt sich eine integrierte Analyseeinheit, die das vollautomatische Durchführen einer Probevorbereitung mit direkt anschliessendem Analysieren der Analyseprobe erlaubt.

Figur 4 zeigt eine besonders vorteilhafte, mäanderförmige Anordnung einer Dialysezelle 11. Die Akzeptorkammer 18 und die Probekammer 4 (in Figur 4 nicht gezeigt) sind mäanderförmig je auf einer Seite der Membran 7 angeordnet. Ähnlich vorteilhafte Resultate lassen sich auch mit einer schnecken- oder spiralförmigen Anordnung der Probekammer und der Akzeptorkammer erreichen.

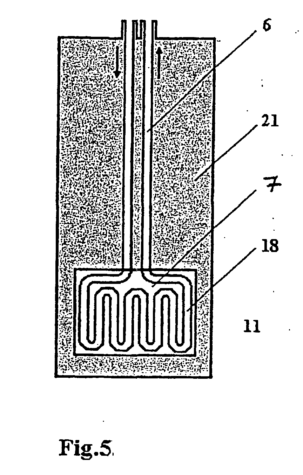

Figuren 5 zeigten eine erfindungsgemässe Vorrichtung mit einem als Sonde 21 ausgebildeten Akzeptorkreis 6. Der Akzeptorkreis 6 ist als Kanal konzipiert. Er wird durch die Dialysemembran 7 gegen aussen begrenzt. Die kanalförmige Akzeptorkammer 18 ist in ein Behältnis mit Analyselösung 3 eintauchbar.

Durch ständiges Zuführen von frischer Analyselösung 3 kann die Konzentration der Analyten in der Probekammer während des Dialysevorgangs annähernd gleich 100% gehalten werden.

Anstelle einer Sonde mit einem Akzeptorkreis aus einem Kanal mit Windungen wie in Figur 5b können auch schlauch- oder beutelförmige Sonden verwendet werden.

Die Sonde kann in ein ständig durch Zufuhr neuer Analyselösung bewegtes Reservoir einer Analyselösung gegeben werden oder selbst durch ein solches Reservoir bewegt werden. In beiden Fällen wird gewährleistet, dass die eine Oberfläche der Dialysemembran in ständigem Kontakt mit frischer, nahezu 100%-iger Analyselösung steht.

## Patentansprüche

1. Verfahren zur Probenvorbereitung für ein chemisches Analyseverfahren, insbesondere für die Ionen-Chromatographie, in einem Dialyseprozess,
bei welchem eine die Analyten (1) einer Analyseprobe (2) enthaltende Analyselösung (3) in eine Probekammer (4) und eine bestimmbare Menge einer Akzeptorlösung (5) in einen Akzeptorkreis (6) gegeben werden,
wobei der Akzeptorkreis (6) und die Probekammer (4) durch eine für die Analyten (1) permeable Membran (7) getrennt sind und
wobei die Analyten (1) von der Analyselösung (3) in die Akzeptorlösung (5) diffundieren und
wobei die vor Beginn des Dialyseprozesses zugeführte Menge der Akzeptorlösung (5) während des Dialyseprozesses im Akzeptorkreis (6) gehalten wird
**dadurch gekennzeichnet, dass**
während des Dialyseprozesses die Konzentration der Analyten (1) in der Probekammer (4) während des Dialyseprozesses wenigstens in einem zu der Membran (7) benachbarten Bereich durch Zuführen von frischer Analyselösung (3) im wesentlichen konstant gehalten wird und dass solange frische Analyselösung (3) kontinuierlich durch die Probekammer (4) gefördert wird, bis die Konzentration der Analyten in der Akzeptorlösung (5) einen Wert von mindestens 95% der Konzentration der Analyten (1) in der Analyselösung (3) aufweist.

2. Verfahren nach Anspruch 1, **dadurch gekennzeichnet, dass** der Fluss der Analyselösung (3) zwischen 0,01 und 10 Milliliter pro Minute, vorzugsweise 0,8 Milliliter pro Minute beträgt.

3. Verfahren nach einem der Ansprüche 1 bis 2, **dadurch gekennzeichnet, dass** die Akzeptorlösung (5) in einem weiteren Verfahrens-schritt einem Analysesystem (15), insbesondere einem Chromatographen zugeführt und analysiert wird.

4. Vorrichtung (10) zur Probenvorbereitung für ein chemisches Analyseverfahren in einem Dialyseprozess, insbesondere für die Chromatographie,
mit einer Dialysezelle (11), welche eine Probekammer (4) zur Aufnahme einer Analyselösung (3) und einen Akzeptorkreis (6) zur Aufnahme einer bestimmbaren Menge einer Akzeptorlösung (5) aufweist, wobei die Probekammer (4) und der Akzeptorkreis (6) durch eine für die Analyten (1) der Analyselösung (3) permeable Membran (7) voneinander getrennt sind,
**dadurch gekennzeichnet,**
**dass** der Akzeptorkreis (6) der Dialysezelle (11) zur Konstanthaltung der eingegebenen Menge von Akzeptorlösung (5) ausgelegt ist und dass eine Einrichtung zum Fördern frischer Analyselösung (3) durch die Probekammer (4) vorgesehen ist.

5. Vorrichtung nach Anspruch 4, **dadurch gekennzeichnet, dass** der Akzeptorkreis (6) eine Akzeptorkammer (18) der Dialysezelle (11) und ein Mehrwegventil (12) aufweist, wobei die Akzeptorkammer (18) beidseitig mit je einem Anschluss (13a, 13b) des Mehrwegventils (12) verbunden ist,
wobei die Anschlüsse (13a, 13b) in einer Dialysestellung (D) zur Schliessung des Akzeptorkreises (6) miteinander verbindbar sind.

6. Vorrichtung nach Anspruch 5, **dadurch gekennzeichnet, dass** ein dritter Anschluss (13c) mit einer Speisung (14) der Akzeptorlösung (5) und ein vierter Anschluss (13d) des Mehrwegventils (12) mit einem Analysesystem (15) verbunden ist, wobei je einer der Anschlüsse (13a, 13b) in einer Spülstellung (S) oder einer Analysestellung (A) mit den dritten und vierten Anschlüssen (13c, 13d) verbindbar sind.

7. Vorrichtung nach einem der Ansprüche 4 bis 6, **dadurch gekennzeichnet, dass** die Vorrichtung (10) zum Fördern der Analyselösung (3) und/oder der Akzeptorlösung (5) eine Pumpe (16), insbesondere eine Zweikanalschlauchpumpe aufweist.

8. Vorrichtung nach einem der Ansprüche 4 bits 7, **dadurch gekennzeichnet, dass** die Vorrichtung (10) zum Fördern der Analyselösung (3) und/oder der Akzeptorlösung (5) ein Spritzen- oder Dosiersystem, insbesondere einen Gasüberdruck auf die Probelösung oder die Akzeptorlösung ausübendes System aufweist.

9. Vorrichtung nach einem der Ansprüche 4 bis 8, **dadurch gekennzeichnet, dass** die Probekammer (4) und/oder die Akzeptorkammer (18) in Form eines mehrfach gewundenen Kanals, insbesondere mäanderförmig ausgebildet sind.

10. Vorrichtung nach einem der Ansprüche 4 bis 8, **dadurch gekennzeichnet, dass** die Probekammer (4) und die Akzeptorkammer (18) schnecken- oder spiralförmig ausgebildet sind.

11. Verfahren nach einem der Ansprüche 1 bis 3, **dadurch gekennzeichnet, dass** eine die Akzeptorlösung (5) enthaltende und durch die Membran (7) begrenzte Sonde (21) in die Analyselösung (3) eingetaucht wird.

12. Vorrichtung nach einem der Ansprüche 4 bis 10, **dadurch gekennzeichnet, dass** der Akzeptorkreis (6) zumindest teilweise als in die Probekammer (4) eintauchbare und durch die Membran (7) begrenzte Sonde (21) ausgebildet ist.

## Claims

1. Method for sample preparation for a chemical analytical method, in particular for ion chromatography, in a dialysis process in which an analysis solution (3) containing the analytes (1) of an analysis sample (2) is placed into a sample chamber (4) and a definable amount of an acceptor solution (5) is placed into an acceptor circuit (6),
the acceptor circuit (6) and the sample chamber (4) being separated by a membrane (7) which is permeable of the analytes (1) and
the analytes (1) defusing from the analysis solution (3) into the acceptor solution (5) and
the amount of the acceptor solution (5) which is fed before the start of the dialysis process being maintained in the acceptor circuit (6) during the dialysis process,
**characterized in that**
during the dialysis process the concentration of the analytes (1) in the sample chamber (4) during the dialysis process is kept essentially constant at least in a zone adjacent to the membrane (7) by feeding fresh analysis solution (3) and
**in that** fresh analysis solution (3) is continuously transported through the sample chamber (4) as long as until the concentration of the analytes in the acceptor solution (5) has a value of at least 95% of the concentration of the analytes (1) in the analysis solution (3).

2. Method according to Claim 1, **characterized in that** the flow of the analysis solution (3) is between 0.01 and 10 millilitres per minute, preferably 0.8 millilitre per minute.

3. Method according to one of Claims 1 to 2, **characterized in that** the acceptor solution (5), in a further method step, is fed to an analysis system (15), in particular a chromatograph, and analyzed.

4. Apparatus (10) for sample preparation for a chemical analytical method in a dialysis process, in particular for chromatography, having a dialysis cell (11) which has a sample chamber (4) for receiving an analysis solution (3) and an acceptor circuit (6) for receiving a definable amount of an acceptor solution (5), the sample chamber (4) and the acceptor circuit (6) being separated from one another by a membrane (7) which is permeable to the analytes (1) of the analysis solution (3),
**characterized in that** the acceptor circuit (6) of the dialysis cell (11) is designed for maintaining constant the input amount of acceptor solution (5), and
**in that** a device for transporting fresh analysis solution (3) through the sample chamber (4) is provided.

5. Apparatus according to Claim 4, **characterized in that** the acceptor circuit (6) has an acceptor chamber (18) of the dialysis cell (11) and a multiple-way valve (12), the acceptor chamber (18) being connected on both sides to one connection each (13a, 13b) of the multiple-way valve (12), the connections (13a, 13b) being connectable to one another in a dialysis position (D) to close the acceptor circuit (6).

6. Apparatus according to Claim 5, **characterized in that** a third connection (13c) is connected to a feed (14) of the acceptor solution (5) and a fourth connection (13d) of the multiple-way valve (12) is connected to an analysis system (15), in each case one of the connections (13a, 13b) being connectable in a purge position (S) or an analysis position (A) to the third and fourth connections (13c, 13d).

7. Apparatus according to one of Claims 4 to 6, **characterized in that** the apparatus (10) has a pump (16), in particular a two-channel peristaltic pump, for transporting the analysis solution (3) and/or the acceptor solution (5).

8. Apparatus according to one of Claims 4 to 7, **characterized in that** the apparatus (10) for transporting the analysis solution (3) and/or the acceptor solution (5) has an injection or metering system, in particular system exerting a gas overpressure on the sample solution or the acceptor solution.

9. Apparatus according to one of Claims 4 to 8, **characterized in that** the sample chamber (4) and/or the acceptor chamber (18) are constructed in the form of a multiply wound channel, in particular in a meander shape.

10. Apparatus according to one of Claims 4 to 8, **characterized in that** the sample chamber (4) and the acceptor chamber (18) are constructed in a screw shape or spiral shape.

11. Method according to one of Claims 1 to 3, **characterized in that** a probe (21) which contains the acceptor solution (5) and is bounded by the membrane (7) is immersed in the analysis solution (3).

12. Apparatus according to one of Claims 4 to 10, **characterized in that** the acceptor circuit (6) is constructed at least in part as probe (21) which can be immersed in the sample chamber (4) and is bounded by the membrane (7).

## Revendications

1. Procédé de préparation d'échantillons pour un procédé d'analyse chimique, notamment pour la chromatographie ionique, dans un processus de dialyse,
dans lequel une solution d'analyse (3) contenant les analytes (1) d'un échantillon d'analyse (2) est mise dans une chambre d'échantillons (4) et une quantité pouvant être définie d'une solution d'accepteur (5) est mise dans un circuit d'accepteur (6),
le circuit d'accepteur (6) et la chambre d'échantillons (4) étant séparés par une membrane (7) perméable aux analytes (1) et
les analytes (1) de la solution d'analyse (3) se diffusant dans la solution d'accepteur (5) et
la quantité de solution d'accepteur (5) amenée avant de démarrer le processus de dialyse étant conservée dans le circuit d'accepteur (6) pendant le processus de dialyse,
**caractérisé en ce que**
pendant le processus de dialyse, la concentration des analytes (1) dans la chambre d'échantillons (4) pendant le processus de dialyse est maintenue sensiblement constante au moins dans une zone voisine de la membrane (7) par l'amenée d'une solution d'analyse (3) fraîche et
**en ce qu'**une solution d'analyse (3) fraîche est acheminée en continu à travers la chambre d'échantillons (4) jusqu'à ce que la concentration des analytes dans la solution d'accepteur (5) présente une valeur d'au moins 95% de la concentration des analytes (1) dans la solution d'analyse (3).

2. Procédé selon la revendication 1, **caractérisé en ce que** le flux de solution d'analyse (3) est compris entre 0,01 et 10 millilitres par minute et s'élève de préférence à 0,8 millilitre par minute.

3. Procédé selon l'une quelconque des revendications 1 à 2, **caractérisé en ce que** la solution d'accepteur (5) est amenée au cours d'une autre étape de procédé dans un système d'analyse (15), notamment dans un chromatographe, et est analysée.

4. Dispositif (10) de préparation d'échantillons pour un procédé d'analyse chimique dans un processus de dialyse, notamment pour la chromatographie,
comprenant une cellule de dialyse (11), laquelle comprend une chambre d'échantillons (4) destinée à recevoir une solution d'analyse (3) et un circuit d'accepteur (6) destiné à recevoir une quantité pouvant être définie d'une solution d'accepteur (5), la chambre d'échantillons (4) et le circuit d'accepteur (6) étant séparés l'un de l'autre par une membrane (7) perméable aux analytes (1) de la solution d'analyse (3),
**caractérisé en ce que**
le circuit d'accepteur (6) de la cellule de dialyse (11) est conçu pour maintenir constante la quantité introduite de solution d'accepteur (5), et
**en ce qu'**il est prévu un système d'acheminement de solution d'analyse (3) fraîche à travers la chambre d'échantillons (4).

5. Dispositif selon la revendication 4, **caractérisé en ce que** le circuit d'accepteur (6) comprend une chambre d'accepteur (18) de la cellule de dialyse (11) et une soupape multivoies (12), la chambre d'accepteur (18) étant reliée de part et d'autre à des raccords respectivement (13a et 13b) de la soupape multivoies (12), les raccords (13a, 13b) pouvant être reliés l'un à l'autre dans une position de dialyse (D) pour fermer le circuit d'accepteur (6).

6. Dispositif selon la revendication 5, **caractérisé en ce qu'**un troisième raccord (13c) est relié à une alimentation (14) de la solution d'accepteur (5) et un quatrième raccord (13d) de la soupape multivoies (12) à un système d'analyse (15), chacun des raccords (13a, 13b) pouvant être relié dans une position de rinçage (S) ou une position d'analyse (A) aux troisième et quatrième raccords (13c, 13d).

7. Dispositif selon l'une quelconque des revendications 4 à 6, **caractérisé en ce que** le dispositif (10) destiné à acheminer la solution d'analyse (3) et/ou la solution d'accepteur (5) comprend une pompe (16), notamment une pompe à tuyau flexible à deux canaux.

8. Dispositif selon l'une quelconque des revendications 4 à 7, **caractérisé en ce que** le dispositif (10) destiné à acheminer la solution d'analyse (3) et/ou la solution d'accepteur (5) comprend un système d'injection ou de dosage, notamment un système exerçant une surpression de gaz sur la solution d'échantillons ou la solution d'accepteur.

9. Dispositif selon l'une quelconque des revendications 4 à 8, **caractérisé en ce que** la chambre d'échantillons (4) et/ou la chambre d'accepteur (18) sont conçues sous forme d'un canal à spirales multiples, notamment en forme de méandres.

10. Dispositif selon l'une quelconque des revendications 4 à 8, **caractérisé en ce que** la chambre d'échantillons (4) et la chambre d'accepteur (18) sont conçues en forme d'hélice ou de spirale.

11. Procédé selon l'une quelconque des revendications 1 à 3, **caractérisé en ce qu'**une sonde (21) contenant la solution d'accepteur (5) et limitée par la membrane (7) est immergée dans la solution d'analyse (3).

12. Dispositif selon l'une quelconque des revendications 4 à 10, **caractérisé en ce que** le circuit d'accepteur (6) est conçu au moins en partie comme une sonde (21) pouvant être immergée dans la chambre d'échantillons (4) et limitée par la membrane (7).
